(19) **Europäisches Patentamt**

**European Patent Office**

**Office européen des brevets**

(11) **EP 1 031 826 A2**

(12) **EUROPÄISCHE PATENTANMELDUNG**

(43) Veröffentlichungstag:
30.08.2000 Patentblatt 2000/35

(51) Int. Cl.[7]: **G01M 3/18**

(21) Anmeldenummer: **00102824.0**

(22) Anmeldetag: **11.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **25.02.1999 DE 19908056**

(71) Anmelder: **Reichert, Curt**
**52396 Heimbach (DE)**

(72) Erfinder: **Reichert, Curt**
**52396 Heimbach (DE)**

(74) Vertreter:
**Patentanwälte**
**Hauck, Graalfs, Wehnert,**
**Döring, Siemons**
**Mörikestrasse 18**
**40474 Düsseldorf (DE)**

(54) **Leckstellenbestimmungsverfahren**

(57) Es wird ein Verfahren zur Bestimmung des Ortes einer Leckstelle in einer ein feuchtes Medium führenden Rohrleitung unter Verwendung mindestens einer entlang der Rohrleitung verlegten, elektrisch leitenden, vorzugsweise von einem Draht gebildeten Fühlerleitung beschrieben. Das Verfahren zeichnet sich dadurch aus, daß zusätzlich zu den üblichen Spannungsmessungen der Anfang des Mediumrohres mit einem hochohmigen Widerstand gegen den Anfang oder das Ende der Fühlerleitung belastet wird und die sich dann einstellenden Spannungswerte gemessen werden. Die insgesamt gewonnenen Meßwerte werden in ein Gleichungssystem eingegeben, aus dem die Lage der Leckstelle ermittelt wird. Auf diese Weise werden zusätzliche Störfaktoren berücksichtigt.

| Gl. 1 | U21 = I * (Rx1 + Rx2) |
| Gl. 2 | U31 = I * Rx2 - Ux |

FIG. 2

EP 1 031 826 A2

**Beschreibung**

Die vorliegende Erfindung betrifft ein Verfahren zur Bestimmung des Ortes einer Leckstelle in einer ein feuchtes Medium führenden Rohrleitung unter Verwendung mindestens einer entlang der Rohrleitung verlegten, elektrisch leitenden, vorzugsweise von einem Draht gebildeten Fühlerleitung, bei dem man die Fühlerleitung mit einem elektrischen Strom beaufschlagt, die elektrische Spannung (U21) zwischen Anfang (Anschluß 1) und Ende (Anschluß 2) Fühlerleitung sowie zwischen Anfang Fühlerleitung (Anschluß 1) und Anfang Mediumrohr (Anschluß 3) (U31) mißt und aus den gemessenen Werten die Lage der Leckstelle ermittelt.

Derartige Rohrleitungssysteme, die vielfach erdverlegt sind, müssen nicht zuletzt im Interesse des Umweltschutzes gegen Leckage überwacht werden. Solche Überwachungssysteme schließen in vielen Fällen Leckortungssysteme ein.

Ein bekanntes Verfahren zur Bestimmung des Ortes einer Leckstelle in einer ein feuchtes Medium führenden Rohrleitung ist ein Meßverfahren mit Widerstandsdraht. Hierbei wird eine Fühlerleitung, bei der es sich insbesondere um einen blanken (oder teilweise blanken) Widerstandsdraht handelt, in den Isolationsraum zwischen dem inneren metallischen Mediumrohr und der äußeren Kunststoffummantelung desselben eingebracht. Den Rückdraht einer derartigen Fühlerleitung kann beispielsweise ein vollisolierter Draht (Kupferdraht) mit im Vergleich zum Widerstandsdraht vernachlässigbarem geringen Widerstand bilden. Die Fühlerleitung wird mit einem elektrischen Strom beaufschlagt, und die elektrische Spannung zwischen Anfang und Ende der Fühlerleitung und Anfang Fühlerleitung und Anfang Mediumrohr wird gemessen. Aus den gemessenen Werten wird die Lage der Leckstelle ermittelt, indem beispielsweise die gemessenen Spannungswerte und die Gesamtlänge der Fühlerleitung (des Mediumrohres) sowie die Länge des Mediumrohres bis zum Leckort zueinander ins Verhältnis gesetzt werden.

Diese Vorgehensweise beruht darauf, daß im Fehlerfall Feuchtigkeit von innen oder von außen in den Isolationsraum eindringt, so daß zwischen der Fühlerleitung und dem Mediumrohr eine elektrisch leitende Verbindung gebildet wird. Es entsteht ein Spannungsteiler, dessen Spannungswert dem Ort der Leckage entspricht. Die genaue Ermittlung des Spannungsteilers ist für die korrekte Bestimmung des Fehlerortes erforderlich.

Es hat sich jedoch gezeigt, daß die bei einem derartigen Verfahren erzielte Genauigkeit in bezug auf die Bestimmung des Leckageortes noch zu wünschen übrig läßt. So werden die erzielten Meßergebnisse oft durch Fremdeinflüsse, die bei einem derartigen Verfahren unberücksichtigt bleiben, verfälscht.

Der Erfindung liegt die Aufgabe zugrunde, ein Verfahren zur Bestimmung des Ortes einer Leckstelle in einer ein feuchtes Medium führenden Rohrleitung zur Verfügung zu stellen, mit dem die Leckstelle besonders genau ermittelt werden kann.

Diese Aufgabe wird erfindungsgemäß bei einem Verfahren der angegebenen Art dadurch gelöst, daß zusätzlich der Anfang des Mediumrohres (Anschluß 3) mit einem hochohmigen Widerstand gegen den Anfang der Fühlerleitung (Anschluß 1) oder das Ende der Fühlerleitung (Anschluß 2) belastet wird, die sich dann einstellenden Spannungswerte (U21~) zwischen den Anschlüssen 1 und 2 und (U31~) zwischen den Anschlüssen 3 und 1 oder (U32~) zwischen den Anschlüssen 3 und 2 gemessen und die so gewonnenen Meßwerte in ein Gleichungssystem eingegeben werden, aus dem die Lage der Leckstelle ermittelt wird.

Bei dem erfindungsgemäßen Verfahren geht man von der Erkenntnis aus, daß in der Praxis im wesentlichen zwei zusätzliche, unbekannte Größen auftreten, die das Meßergebnis verfälschen. Dies ist einerseits der Isolationswiderstand (Widerstand der das Mediumrohr umgebenden Isolation), der vom Grad der Durchfeuchtung und der Zusammensetzung des Mediums (Wassers) abhängig ist. Andererseits entsteht infolge des galvanischen Effektes zwischen den verschiedenen Metallen (Fühlerleitung/Rohr) in Abhängigkeit von der Zusammensetzung des Mediums (Wassers) eine zusätzliche Gleichspannungsquelle, deren Innenwiderstand, Spannung und Polarität unbekannt sind.

Im Schadensfall wird daher das System durch vier unbekannte Größen gekennzeichnet:

Rx1, Rx2 = Teilwiderstände Leitungsanfang/Schadensstelle und Schadensstelle/Leitungsende mit Rx1 + Rx2 = R (Gesamtwiderstand);
Riso = Isolationswiderstand + Innenwiderstand von Ux und
Ux = unbekanntes Spannungselement.

Der Einfluß von Ux zur Messung des Isolationswiderstandes könnte zwar dadurch reduziert werden, daß eine sehr große Meßspannung (> 100 V) verwendet wird. Jedoch erfordert diese Variante einen großen Aufwand an Schutzmaßnahmen gegen unbeabsichtigtes Berühren und scheidet daher aus. Die vorstehend aufgeführten unbekannten Größen sollen daher mit geringer Meßspannung (< 10 V) ermittelt werden.

Aus der Theorie ist bekannt, daß z. B. eine Spannungsquelle durch Leerlaufspannung und Kurzschlußstrom eindeutig bestimmt werden kann. Im vorliegenden Fall wird ähnlich vorgegangen.

Wie bei dem herkömmlichen Verfahren wird an den Anschlüssen 1 und 2, d. h. Anfang und Ende der Fühlerleitung, ein Strom eingeprägt. Dadurch entsteht über der Fühlerleitung (Widerstandsdraht) ein stabiler, meßbarer Spannungsabfall (U21).

Des weiteren wird der Spannungswert zwischen Anfang Fühlerleitung (Anschluß 1) und Anfang Mediumrohr (Anschluß 3), d. h. der Wert U31, gemessen.

Da Riso (Isolationswiderstand + Innenwiderstand von Ux) vom Zustand des Systems (trocken, feucht, durchnäßt) abhängig ist, d. h. verhältnismäßig hochohmig ist und in der Größenordnung von einigen 100 KΩ bis 20 MΩ liegt, wird der Anschluß 3 mit einem ähnlich hochohmigen Widerstand (beispielsweise 2,2 MΩ) gegen Anschluß 1 oder bei einer weiteren Messung gegen Anschluß 2 belastet, und die sich dann einstellenden Spannungswerte werden gemessen. Die auf diese Weise gewonnenen Meßwerte werden in ein Gleichungssystem eingegeben, aus dem die vorstehend angegebenen vier unbekannten Größen berechnet werden. Hieraus kann dann die Lage des Leckageortes ermittelt werden, und zwar auf wesentlich exaktere Weise als beim Stand der Technik.

Eine besonders bevorzugte Variante des erfindungsgemäßen Verfahrens zeichnet sich dadurch aus, daß Anschluß 3 sowohl gegen Anschluß 1 als auch gegen Anschluß 2 mit einem hochohmigen Widerstand belastet wird, beide Spannungswerte gemessen und beide Meßwerte in das Gleichungssystem eingegeben werden. Die Belastung des Anschlusses 3 in Richtung Anschluß 1 bzw. 2 bewirkt, daß durch die unbekannte Spannungsquelle (Ux) der Strom einmal in positiver Richtung bzw. bei der nächsten Messung in negativer Richtung fließt, was den Einfluß der Messung (bei Mehrfachmessung und anschließender Mittelwertbildung) auf die Spannungsquelle reduziert. Außerdem ist bei allen Messungen das Mediumrohr belastet. Insbesondere bei hohen Isolationswiderständen wirkt diese Maßnahme dem elektrischen "Schweben" einer unbelasteten Leitung entgegen.

In Weiterbildung des erfindungsgemäßen Verfahrens werden die ermittelten Spannungswerte zeitlich so abgetastet (digitalisiert), daß mindestens eine Periode vollständig mit mehreren Stützwerten erfaßt worden ist und der über die Stützwerte gebildete Mittelwert für Wechselspannungen mit dieser Periode bzw. ganzzahlige Oberwellen gerade 0 ergibt. Mit dieser Verfahrensvariante können weitere Störquellen ausgeschaltet werden.

Es muß nämlich bei erdverlegten Fernheizungsrohren im allgemeinen mit erheblichen Störquellen gerechnet werden, zu denen alle Varianten von Stromversorgungsleitungen (beispielsweise Hochspannungsüberlandleitungen, Erdkabel, Mittel- und Niederspannungsfreileitungen, Fahrleitungen von Zügen, Straßenbahnen etc.) gehören, die in ihrer Umgebung elektrische und magnetische Wechselfelder mit einer Frequenz von 50 Hz (16 2/3 Hz = 50 Hz/3) bzw. ganzzahligen Oberwellen erzeugen. Ein Großteil dieser Störspannungen läßt sich zwar durch geeignete Tiefpaßfilter unterdrücken. Jedoch verlängern derartige Filter das Einschwingverhalten des Gesamtsystems, das wegen der Hochohmigkeit ohnehin schon langsam einschwingt.

Je höher die Anzahl der Stützstellen innerhalb einer Periode, insbesondere 50 Hz-Periode, ist, desto höher ist der Grad der Oberwelle, die auf diese Art und Weise noch weggerechnet wird (Shannon Theorem).

Selbstverständlich funktioniert dieses Verfahren bei entsprechender Wahl der Abtastpunkte (Sampling Rate) auch für andere Frequenzen (z. B. 60 Hz).

Das erfindungsgemäße Verfahren wird nachfolgend anhand eines Ausführungsbeispiels in Verbindung mit der Zeichnung im einzelnen erläutert. Es zeigen:

Figur 1 ein Schaltbild, das einem herkömmlichen Verfahren zugrundeliegt;

Figur 2 ein Schaltbild, das der Leerlaufmessung des erfindungsgemäßen Verfahrens zugrundeliegt; und

Figur 3 ein Schaltbild, das der belasteten Messung des erfindungsgemäßen Verfahrens zugrundeliegt.

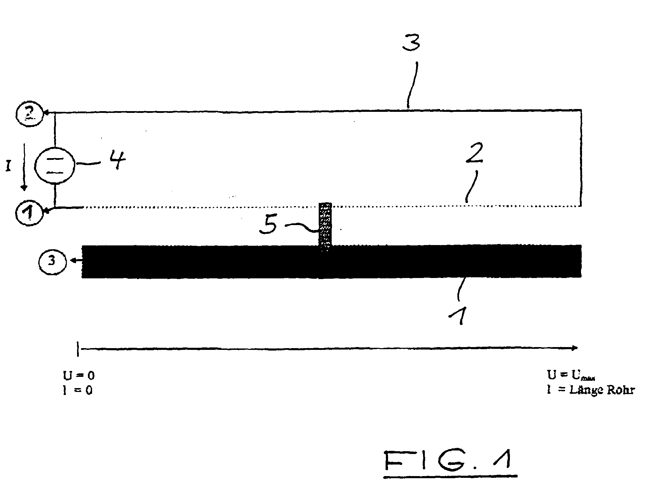

Figur 1 zeigt in schematischer Weise eine Rohrleitung 1, die aus einem inneren Metallrohr, einer äußeren Kunststoffummantelung und einer zwischen dem Metallrohr und der Kunststoffummantelung angeordneten Isolation besteht. In den Isolationsraum zwischen dem inneren Metallrohr und der äußeren Kunststoffummantelung ist eine Fühlerleitung 2 eingebracht, bei der es sich um einen blanken Widerstandsdraht handelt. Die Fühlerleitung 2 erstreckt sich vom Anfang bis zum Ende der Rohrleitung. An das Ende der Fühlerleitung 2 ist ein Rückdraht 3 angeschlossen, bei dem es sich um einen vollisolierten Kupferdraht mit im Vergleich zum Widerstandsdraht vernachlässigbarem geringen Widerstand handelt. Anschluß 1 bildet den Anfang der Fühlerleitung 2, und Anschluß 2 bildet das Ende der Fühlerleitung bzw. das Ende des Rückdrahtes 3. Anschluß 3 wird vom Anfang des Metallrohres der Rohrleitung 1 gebildet.

Bei dem bekannten Meßverfahren mit Widerstandsdraht wird eine Stromquelle 4 an die Fühlerleitung 2 gelegt. Der Widerstandsdraht wird somit von einem Strom durchflossen. Sobald im Fehlerfall Feuchtigkeit von innen oder von außen in den Isolationsraum eindringt, wie bei 5 gezeigt, bildet sich über das leitende Metallrohr ein Spannungsteiler aus, dessen Spannungswert dem Ort der Leckage entspricht.

Der Fehlerort errechnet sich hierbei aus der Gleichung $x = L(U13/U12)$, wobei x der Fehlerort, L die Länge des Rohres, U13 die Spannung zwischen den Anschlußklemmen 1 und 3 und U12 die Spannung zwischen den Anschlußklemmen 1 und 2 sind.

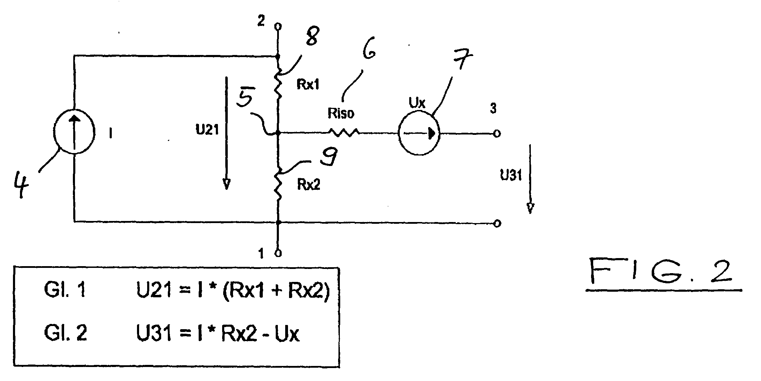

Figur 2 zeigt ein Schaltbild, das dem erfindungsgemäßen Verfahren zugrundeliegt. Hierbei wird davon ausgegangen, daß in der Praxis im wesentlichen zwei zusätzliche, unbekannte Größen auftreten, die das Meßergebnis verfälschen, nämlich der Isolationswiderstand, der abhängig vom Grad der Durchfeuchtung, der Zusammensetzung des Mediums (Wassers) etc. ist, und eine zusätzliche Gleichspannungsquelle, die infolge des galvanischen Effektes zwischen den verschiedenen Metallen (Draht/Rohr) in Abhängigkeit von der Zusammensetzung des Mediums (Wassers) entsteht und deren Innenwiderstand, Spannung und Polarität unbekannt sind. Mit Riso ist in Figur 2 der Isolationswiderstand + Innenwiderstand der Gleichspannungsquelle bezeichnet. Mit Ux ist das unbekannte Spannungselement (Gleichspannungsquelle) bezeichnet. Der entsprechende Widerstand ist in Figur 2 bei 6 angedeutet. Die Gleichspannungsquelle ist bei 7 gezeigt. Die drei Anschlüsse 1, 2 und 3 entsprechen denen von Figur 1. Mit 5 ist die Leckstelle bezeichnet, während mit 4 eine Konstantstromquelle bezeichnet ist. Die beiden Teilwiderstände vom Leitungsanfang zur Leckstelle und vom Leitungsende zur Leckstelle sind mit 9 und 8 (Rx2, Rx1) bezeichnet.

Bei dem erfindungsgemäßen Verfahren werden die Spannungen U21 und U31 gemessen (Leerlaufmessung). Die entsprechenden Werte werden in die beiden Gleichungen 1 und 2 eingeführt, die in Figur 2 aufgeführt sind.

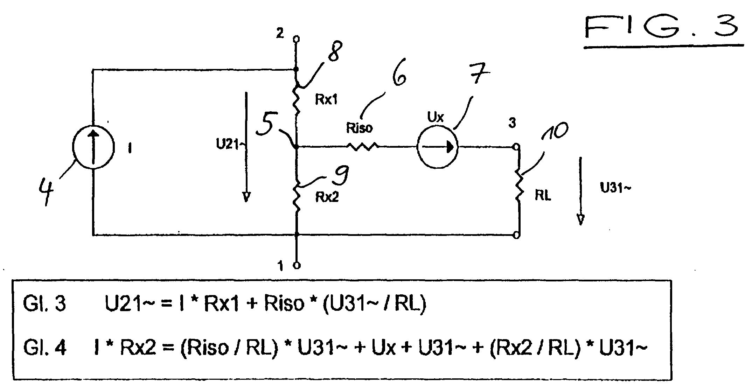

Bei einer nachfolgenden Messung wird Anschluß 3 mit einem hochohmigen Widerstand 10 (RL) gegen Anschluß 1 belastet. Die sich dann einstellenden Spannungswerte U21~ und U31~ werden dann gemessen. Figur 3 zeigt das entsprechende Schaltbild sowie zwei weitere Gleichungen 3 und 4, in die die Meßwerte eingeführt werden.

Es sind dann vier Gleichungen vorhanden, aus denen die unbekannten Größen Rx1, Rx2, Riso und Ux ermittelt werden. Nachfolgend sind ein Rechenbeispiel zur Ermittlung dieser Größen und eine Kontrollrechnung hierfür wiedergegeben.

aus Gl. 3    I * Rx1 = U21~ - Ux - U31~ - (Riso / RL) * U31~

Gl. 3 addiert mit Gl. 4    U21 = U21~ - Ux - U31~ - (Riso/RL)*U31~ + (Riso/RL)*U31~ + Ux
mit U12 = I (Rx1 + Rx2)    + U31~ + (Rx2 / RL) *U31~

U21 = U21~ + (Rx2/RL)* U31~

daraus folgt:    Rx2 = ((U21 - U21~ ) * RL) / U31~    Gl.5

Gl.5 in Gl.2    U31 = I * ((U21 - U21~)/ U31~ ) * RL - Ux

Ux = I * ((U21 - U21~ ) / U31~ ) * RL - U31    Gl.6

aus Gl. 4    Riso = (I* Rx2 * RL) / U31~ - Rx2 - RL * ((U31~ + Ux ) / U31~ )    Gl. 7
mit Rx2 aus Gl. 5 und Ux aus Gl. 6

aus Gl. 1    Rx1 = U21 / I  - Rx2  mit Rx2 aus Gl. 5

Kontrollrechnung: Rx1 = 1K, Rx2 = 2K, Riso =1M, Ux = 0,5V

RL = 2M (externer Lastwiderstand, I = 1mA

U12 = I / (Rx1 +Rx2)  = 3 V,  U31 = 2V - 0.5V = 1.5V

aus Gl. 4    U31~ = (I*Rx2 -Ux )/( Riso/RL + Rx2/RL + 1) = 0.9993334V

mit Gl. 3  U12~ = 2.999001 V

mit Gl. 5  Rx2 = ((3 - 2.999001)/0.999334) * 2000000 = 1.999 K

mit Gl. 6 : 0.001*((3-2.999001)/0.999334)*2000000 - 1.5 = 0.4993 = Ux

mit Gl. 7 :  Riso = 999.99 K

mit Gl. 8  Rx1 = 3/ 1 -1.999 = 1.001 K

**Patentansprüche**

1. Verfahren zur Bestimmung des Ortes einer Leckstelle in einer ein feuchtes Medium führenden Rohrleitung unter Verwendung mindestens einer entlang der Rohrleitung verlegten, elektrisch leitenden, vorzugsweise von einem Draht gebildeten Fühlerleitung, bei dem man die Fühlerleitung mit einem elektrischen Strom beaufschlagt, die elektrische Spannung (U21) zwischen Anfang (Anschluß 1) und Ende (Anschluß 2) Fühlerleitung (2) sowie zwischen Anfang (Anschluß 1) Fühlerleitung (2) und Anfang (Anschluß 3) Mediumrohr (1) mißt (U31) und aus den gemessenen Werten die Lage der Leckstelle ermittelt, dadurch gekennzeichnet, daß zusätzlich der Anfang (Anschluß 3) des Mediumrohres (1) mit einem hochohmigen Widerstand (10) gegen den Anfang (Anschluß 1) der Fühlerleitung (2) oder das Ende (Anschluß 2) der Fühlerleitung (2) belastet wird, die sich dann einstellenden Spannungswerte (U21~) zwischen den Anschlüssen 1 und 2 und (U31~) zwischen den Anschlüssen 3 und 1 oder (U32~) zwischen den Anschlüssen 3 und 2 gemessen und die so gewonnenen Meßwerte in ein Gleichungssystem eingegeben werden, aus dem die Lage der Leckstelle ermittelt wird.

2. Verfahren nach Anspruch 1, dadurch gekennzeichnet, daß die Teilwiderstände Anschluß 1-Leckstelle (Rx1) und/oder Anschluß 2-Leckstelle (Rx2) ermittelt werden.

3. Verfahren nach Anspruch 1 oder 2, dadurch gekennzeichnet, daß Anschluß 3 sowohl gegen Anschluß 1 als auch gegen Anschluß 2 mit einem hochohmigen Widerstand belastet wird, beide Spannungswerte gemessen und beide Meßwerte in das Gleichungssystem eingegeben werden.

4. Verfahren nach einem der vorangehenden Ansprüche, dadurch gekennzeichnet, daß die ermittelten Spannungswerte zeitlich so abgetastet (digitalisiert) werden, daß mindestens eine Periode vollständig mit mehreren Stützwerten erfaßt worden ist und der über die Stützwerte gebildete Mittelwert für Wechselspannungen mit dieser Periode bzw. ganzzahlige Oberwellen gerade 0 ergibt.

5. Verfahren nach Anspruch 4, dadurch gekennzeichnet, daß die Periode 50 Hz (20 msec) beträgt.

FIG. 1

FIG. 2

Gl. 1    U21 = I * (Rx1 + Rx2)

Gl. 2    U31 = I * Rx2 - Ux

FIG.3

$$Gl.\ 3 \quad U21\sim = I * Rx1 + Riso * (U31\sim / RL)$$

$$Gl.\ 4 \quad I * Rx2 = (Riso / RL) * U31\sim + Ux + U31\sim + (Rx2 / RL) * U31\sim$$

EP 1 031 826 A2